# EUROPÄISCHE PATENTSCHRIFT

(11) **EP 0 719 405 B1**
(45) Veröffentlichungstag und Bekanntmachung des Hinweises auf die Patenterteilung: **02.12.1998**
(21) Anmeldenummer: 94928340.2
(22) Anmeldetag: 13.09.1994
(51) Int. Cl.: G01L 5/00, G01L 5/16

(54) **DOPPELKEILKRAFTMESSVORRICHTUNG**
FORCE-MEASURING DEVICE WITH DOUBLE WEDGE
DISPOSITIF DYNAMOMETRIQUE AVEC CLAVETTE DOUBLE

(30) Priorität: 14.09.1993 DE 4331104; 15.09.1993 DE 4331405
(43) Veröffentlichungstag der Anmeldung: 03.07.1996
(73) Patentinhaber: Kluft, Werner, D-52078 Aachen (DE)
(72) Erfinder: Kluft, Werner, D-52078 Aachen (DE)
(74) Vertreter: Dallmeyer, Georg, Dipl.-Ing.
(86) Internationale Anmeldenummer: EP9403056
(87) Internationale Veröffentlichungsnummer: WO9508102

(56) Entgegenhaltungen:
- EP-A- 0 433 535
- DE-A- 2 736 373
- US-A- 4 671 492

## Beschreibung

Die Erfindung betrifft eine Kraftmeßvorrichtung mit einem Kraftsensor zum Messen von Kräften zwischen einander parallelen Maschinenteilen, vorzugsweise im Kraftnebenfluß, nach dem Oberbegriff des Anspruchs 1.

Derartige Kraftmeßvorrichtungen werden benötigt für das Messen von Kräften in Maschinen, insbesondere Werkzeugmaschinen und vorzugsweise im Kraftnebenfluß. Die Messung im Kraftnebenfluß ist aus der CH-PS 476 990 und der DE 27 36 373 A1 bekannt. Bei einer Messung im Kraftnebenfluß braucht der Kraftsensor lediglich einen Teil der entstehenden Kräfte zu messen, so daß der Meßbereich erheblich erweitert werden kann.

Aus der EP 0 433 535 A sind Kraftmeßvorrichtungen mit mindestens einem Kraftsensor bekannt, die zwecks Messung der Kräfte im Kraftnebenfluß in taschenförmigen Aussparungen zwischen zwei Maschinenteilen eingespannt werden. Dabei ist es bekannt, für die Kraftmeßvorrichtung Keilpaare zu verwenden, die den Einbau der Kraftmeßvorrichtung mit Vorspannung erlauben. Die bekannten Meßvorrichtungen weisen aber eine derartige Bauhöhe auf, daß sie sich nicht in Zwischenplatten von 12 mm Dicke einbauen lassen, weil das Keilpaar gemeinsam mit dem Meßelement eine Dicke von ca. 16 mm aufweist. Die standardmäßig verwendeten Zwischenplatten bzw. Kraftmeßplatten weisen dagegen eine Dicke von 12 mm auf. Derartige Zwischenplatten werden beispielsweise zwischen Werkzeugrevolver und Werkzeugschlitten in Drehmaschinen mit dem Ziel der Werkzeug- oder Prozeßüberwachung eingebaut. Zur Aufnahme von Kraftmeßeinrichtungen sind die Zwischenplatten entsprechend ausgespart. Ferner haben die bekannten Kraftmeßvorrichtungen den Nachteil, mehrteilig zu sein, so daß deren Montage erschwert ist. Ein weiterer Nachteil dieser bekannten Kraftmeßvorrichtung ist, daß die Position des Kraftsensors nicht genau definiert ist. Dies hat zur Folge, daß der Kraftsensor beim Anordnen der Kraftmeßvorrichtung in der Aussparung des Maschinengehäuses verrutschen kann und dementsprechend auch mit seinen Seitenflächen und/oder mit der Stirnfläche am Maschinengehäuse anliegen kann, was zu unterschiedlichen Meßergebnissen führen kann.

Auch geht aus der Beschreibung dieser bekannten Druckschrift (Seite 6, Zeilen 38 bis 24) nicht deutlich hervor, wie nun eine einfache und sichere Montage, d.h. bei der ein Auseinanderfallen der Kraftmeßvorrichtung verhindert wird, vorgenommen werden kann. Der Keil 28 der Keilpaaranordnung wird als "fester Keil" beschrieben, was darauf deuten läßt, daß lediglich der Keil 27 der Keilpaaranordnung verschoben werden kann. Wie die feste Stellung des Keiles 28 erreicht werden kann, wird nicht beschrieben. Einige der bekannten Kraftmeßvorrichtungen müssen zur Einstellung der Vorspannkraft an den Maschinenteilen befestigt werden oder sich gegen diese abdrücken. Auch dies ist im Hinblick auf eine einfache Montage unerwünscht.

Der Erfindung liegt die Aufgabe zugrunde, eine Kraftmeßvorrichtung zu schaffen, die bei geringerer Bauhöhe einfacher montiert werden kann und vielseitiger verwendbar ist.

Zur Lösung dieser Aufgabe dienen die Merkmale des Anspruchs 1.

Die Erfindung sieht in vorteilhafter Weise vor, daß der Kraftsensor in einem ersten Meßkeil in einer Aussparung derart integriert ist, daß der Kraftsensor über dem ersten Meßkeil übersteht, mit einer ersten Meßfläche eine erste Auflagefläche bildet und mit der zweiten zu der ersten parallelen Meßfläche in der Aussparung abgestützt ist, daß der erste Meßkeil auf der der Auflagefläche gegenüberliegenden Seite eine erste kraftübertragende schräge Gleitfläche aufweist, daß ein zweiter flacher Meßkeil eine zu der ersten Gleitfläche parallele zweite kraftübertragende Gleitfläche sowie auf der der zweiten Gleitfläche gegenüberliegenden Seite eine zu der ersten Auflagefläche parallele zweite Auflagefläche aufweist, und daß die Meßkeile auf den Gleitflächen relativ zueinander parallel mit Hilfe einer Verstelleinrichtung verschiebbar sind und über die Verstelleinrichtung miteinander verbunden sind.

Eine derartige Bauweise ermöglicht eine platzsparende Anordnung, da der erste Meßkeil nicht wesentlich höher sein muß als der Kraftsensor, während der zweite Meßkeil flach gestaltet werden kann. Ein wesentlicher Vorteil besteht auch darin, daß die Kraftmeßvorrichtung einteilig gestaltet ist. Auf diese Weise ist der Einbau besonders problemlos zu gestalten und insbesondere auch in einfacher Weise nachträglich durchzuführen. Die erfindungsgemäße Konstruktion ermöglicht eine Gesamthöhe der Kraftmeßvorrichtung, die nicht wesentlich größer ist als die durch den Kraftsensor vergegebene Mindesthöhe. Es lassen sich somit Kraftmeßvorrichtungen von 12 mm Bauhöhe herstellen, die auch in standardgemäßen Zwischenplatten zur Kraftmessung zwischen zwei Maschinenteilen einsetzbar sind.

Die Gleitfläche des zweiten Meßkeils läuft nahezu bis zu der unteren Auflagefläche aus. Auf diese Weise kann die Bauhöhe der Kraftmeßvorrichtung im Prinzip bis auf die Dicke des ersten Meßkeiles verringert werden.

Vorzugsweise ist vorgesehen, daß der zweite Meßkeil den ersten Meßkeil in einer Aussparung aufnimmt, die von mindestens zwei Seitenwänden begrenzt ist. Auf diese Weise ist es möglich, die Gleitfläche des zweiten Meßkeils so weit fortzusetzen, bis sie in die zweite Auflagefläche des zweiten Meßkeils übergeht. Dabei dienen die Seitenwände zur Stabilitätserhöhung, so daß die zweite Gleitfläche an ihrem auslaufenden freien Ende vor Beschädigung geschützt ist. Eine derartige seitlich versteifte Gleitfläche ermöglicht eine Verringerung der minimalen Wandstärke und damit der Bauhöhe der Kraftmeßvorrichtung.

Die Verstelleinrichtung ist vorzugsweise in einer orthogonal zu den Seitenwänden verlaufenden Querwand angeordnet, und zwar vorzugsweise an dem höheren Ende der zweiten Gleitfläche. Sie ermöglicht eine Einstellung einer Vorspannung zwischen den Auflageflächen 5,6 in einer taschenförmigen Aussparung zwischen zwei zueinander parallelen Maschinenteilen, ohne daß sich Elemente der Verstelleinrichtung gegen die Maschinenteile abstützen müssen.

Der Schrägwinkel der Gleitflächen beträgt ca. 3 - 9 °, vorzugsweise ca. 6 °.

Das Einsetzen des ersten Meßkeils in eine von zwei Seitenwänden und mindestens einer Querwand begrenzten Aussparung hat den Vorteil, trotz reduzierter Abmessungen des Bauelementes, eine stabile und steife Kraftmeßvorrichtung zu schaffen, die in hohem Maße belastbar ist.

Im folgenden wird unter Bezugnahme auf die Zeichnungen ein Ausführungsbeispiel der Erfindung näher erläutert.

Es zeigen:
- Fig. 1: einen Querschnitt einer erfindungsgemäßen Kraftmeßvorrichtung,
- Fig. 2: eine Ansicht der hinteren Stirnfläche der Kraftmeßvorrichtung,
- Fig. 3: eine Draufsicht auf die Kraftmeßvorrichtung der Fig. 1.
- Fig. 4: den Einbau der Kraftmeßeinrichtung in eine Zwischenplatte, und
- Fig. 5: eine zwischen zwei Maschinenteile in einer Aussparung eingespannte Kraftmeßeinrichtung.

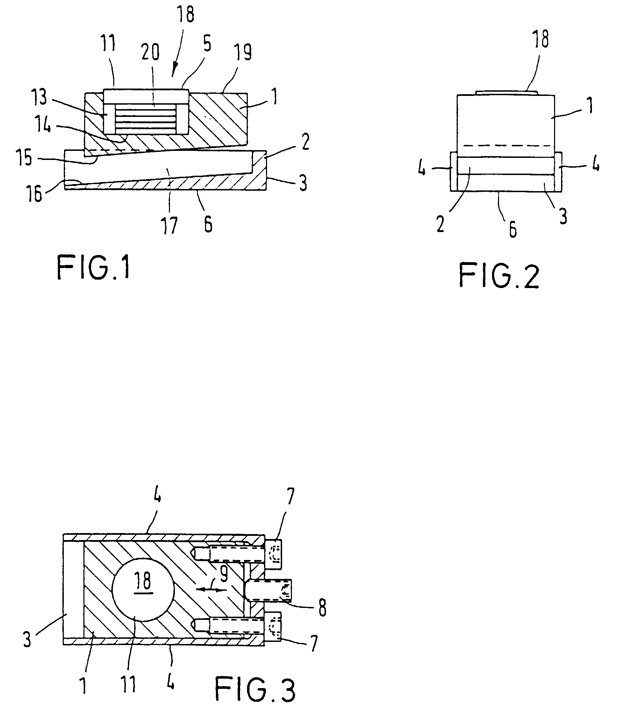

Die Kraftmeßvorrichtung besteht im wesentlichen aus zwei miteinander zusammenwirkenden Meßkeilen 1,3, einer Verstelleinrichtung 7,8, die eine Parallelverschiebung 9 der Meßkeile 1,3 relativ zueinander ermöglicht und einem Kraftsensor 18, der in dem ersten Meßkeil in einer Aussparung 13 integriert ist. Die den Kraftsensor aufnehmende Aussparung ist in dem höheren Teil des Meßkeils 1 angeordnet, wobei der Kraftsensor 18 mit einer ersten Meßfläche 11 gegenüber dem Meßkeil 1 übersteht und mit seiner Meßfläche 11 eine erste Auflagefläche 5 der Kraftmeßvorrichtung bildet. Der Kraftsensor 18 steht im unbelasteten Zustand um einen solchen Betrag gegenüber der zu der Auflagefläche 5 parallelen Oberfläche 19 des Meßkeils 1 über, der seiner maximal zulässigen Stauchung entspricht, so daß gleichzeitig eine Überlastsicherung für den Kraftsensor 18 geschaffen ist. Die Auflagefläche 5 verläuft parallel zu den Flächen zueinander paralleler Maschinenteile 10,12, zwischen denen die Kraft gemessen werden soll. Die Bauhöhe des Meßkeils 1 muß gegenüber der Bauhöhe des Kraftsensors 18 nicht wesentlich größer sein. Der in Fig. 1 gezeigte Meßkeil 1 könnte daher noch so weit verkleinert werden, daß die Schräge der Gleitfläche 15 auf der Unterseite des Meßkeils 1 bis nahe an die Aussparung 13 für den Kraftsensor 18 herangeführt ist.

Die Darstellungen in Fig. 1 und 2 zeigen die Kraftmeßvorrichtung in zerlegtem Zustand.

Wie aus Fig. 3 ersichtlich ist, ist jedoch der obere Meßkeil 1 mit dem unteren Meßkeil 3 über die Verstelleinrichtung 7,8 fest miteinander verbunden, so daß die Teile bei der Montage nicht auseinanderfallen können. Der untere Meßkeil 3 weist eine von einer Querwand 2 und zwei zueinander parallelen Seitenwänden 4 begrenzte Aussparung auf, die den oberen Meßkeil 1 auf einer zu der ersten Gleitfläche 15 des oberen Meßkeils 1 parallelen unteren Gleitfläche 16 des unteren Meßkeils 3 gleitend aufnimmt. Der Schrägwinkel der zueinander parallelen Gleitflächen 15,16 beträgt ca. 3 - 9 °, vorzugsweise 6 °.

Die Verstelleinrichtung besteht aus mindestens einer Spannschraube 7 und einer Lösungs- bzw. Ausdrückschraube 8, die parallel zur Bewegungsrichtung 9 des Meßkeils 1 durch die Querwand 2 hindurchgeführt sind. Mit Hilfe der Verstelleinrichtung kann der obere Meßkeil 1 in der Bewegungsrichtung 9 parallel zu den Seitenwänden 4 auf den kraftübertragenden Gleitfächen 15,16 verschoben werden, wodurch sich der Abstand der Auflageflächen 5 und 6 verändert und eine vorgegebene Vorspannkraft zwischen Maschinenteilen 10,12 einstellbar ist.

Die zu der Auflagefläche 5 des Kraftsensors 18 parallele untere Auflagefläche 6 des zweiten Meßkeils 3 stützt sich gegen das Maschinenteil 12 ab. Die Gleitfläche des unteren Meßkeils 3 kann an dem der Querwand 2 gegenüberliegenden Ende nahezu bis zu der unteren Auflagefläche 6 geführt werden, da die Seitenwände 4 dem unteren Meßkeil 3 eine ausreichende Stabilität verleihen.

Der Kabelanschluß 22 für den Kraftsensor 18 kann vorzugsweise an einer der kurzen Stirnseiten des oberen Meßkeils 1 herausgeführt sein.

Der Kraftsensor 18 kann aus einem ein-, zwei- oder dreidimensionalen Kraftmeßelement bestehen.

Mit einem 3D-Quarzmeßelement lassen sich quasi-statische und dynamische Dehnungsmessungen bzw. Stauchungsmessungen in Strukturen von Maschinenbauteilen oder Vorrichtungen nach dem Kraftnebenfluß- bzw. Bypass-Meßprinzip durchführen.

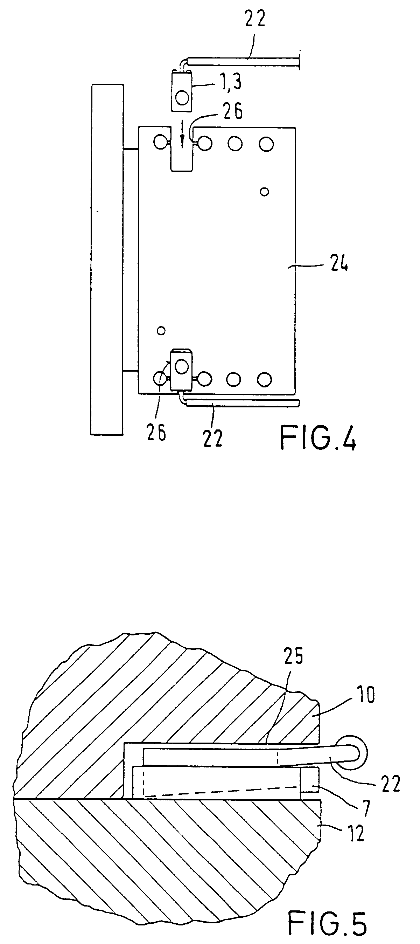

Fig. 4 zeigt den Einbau der Kraftmeßvorrichtung in eine Zwischenplatte 24, die mit obben und unten offenen Aussparungen 26 versehen ist.

Fig. 5 zeigt den Einbau der Kraftmeßvorrichtung in eine taschenförmige Aussparung 25 zwischen zwei Maschinenteilen 10,12.

## Patentansprüche

1. Kraftmeßvorrichtung mit einem Kraftsensor (18) zum Messen von Kräften in einer taschenförmigen Aussparung (13) zwischen einander parallelen Maschinenteilen (10,12), vorzugsweise im Kraftnebenfluß, mit zwei zueinander parallelen Auflageflächen (5,6), deren orthogonaler Abstand veränderlich ist, mit einer Meßkeilpaaranordnung (1,2,3), die zwei Meßkeile (1,3) aufweist, die über eine Verstelleinrichtung (7,8) miteinander verbunden sind, wobei der erste Meßkeil (1) relativ zu dem zweiten Meßkeil (3) zur Einstellung des Abstandes zwischen den Auflageflächen (5,6) über die Verstelleinrichtung (7,8) verschiebbar ist, wobei die Keilpaaranordnung (1,2,3) und der Kraftsensor (18) ohne Befestigung an einem Maschinenteil in der taschenförmigen Aussparung eingespannt sind,
**dadurch gekennzeichnet,**
daß der Kraftsensor mit der Meßkeilanordnung eine bauliche Einheit bildet und in dem ersten Meßkeil (1) integriert ist, und daß der Kraftsensor (18) mit einer ersten Meßfläche (11) gegenüber dem Meßkeil (1) übersteht und die erste Auflageflächen (5) bildet und mit der zweiten zu der ersten parallelen Meßfläche (14) in dem Meßkeil (1) abgestützt ist.

2. Kraftmeßvorrichtung nach Anspruch 1, dadurch gekennzeichnet, daß die Gleitfläche (16) des zweiten Meßkeiles (3) nahezu bis zu der unteren Auflagefläche (6) des zweiten Meßkeiles (3) ausläuft.

3. Kraftmeßvorrichtung nach Anspruch 1 oder 2, dadurch gekennzeichnet, daß der Kraftsensor (18) in dem Meßkeil (1) in dem Bereich mit der größeren Höhe in einer Aussparung (13) angeordnet ist.

4. Kraftmeßvorrichtung nach einem der Ansprüche 1 bis 3, dadurch gekennzeichnet, daß die Bauhöhe des Meßkeils (1) in dem Bereich mit der größeren Höhe nicht wesentlich größer ist als die Bauhöhe des Kraftsensors (18).

5. Kraftmeßvorrichtung nach einem der Ansprüche 1 bis 4, dadurch gekennzeichnet, daß der zweite Meßkeil (3) den ersten Meßkeil (1) in einer von zwei seitlich neben den Gleitflächen (15,16) verlaufenden Seitenwänden (4) begrenzten Aussparung (17) aufgenommen ist.

6. Kraftmeßvorrichtung nach Anspruch 5, dadurch gekennzeichnet, daß die Aussparung (17) in dem zweiten Meßkeil (3) ferner von einer Querwand (2) begrenzt ist, die die mit dem ersten Meßkeil (1) zusammenwirkende Verstelleinrichtung (7,8) aufnimmt.

7. Kraftmeßvorrichtung nach einem der Ansprüche 1 bis 6, dadurch gekennzeichnet, daß der Kraftsensor (18) aus mehreren piezoelektrischen integrierten Quarzscheiben (20) besteht, die eine Kraftmessung in einer, zwei oder drei orthogonal zueinanderstehenden Richtungen ermöglichen.

8. Kraftmeßvorrichtung nach einem der Ansprüche 1 bis 7, dadurch gekennzeichnet, daß der Schrägwinkel der Gleitflächen (15,16) relativ zu den Auflageflächen (5,6) ca. 3 - 9 °, vorzugsweise 6 °, beträgt.

9. Kraftmeßvorrichtung nach einem der Ansprüche 1 bis 8, dadurch gekennzeichnet, daß ein Anschlußkabel (22) für den Kraftsensor (18) an einer der kurzen Stirnseiten des Meßkeils (1) herausgeführt ist.

## Claims

1. A force measuring device comprising a force sensor (18) for measuring forces in a pocket-shaped recess (13) between mutually parallel machine parts (10,12), preferably in force bypass, comprising two mutually parallel abutment faces (5,6) adapted for adjustment of the orthogonal distance therebetween, a measuring wedge pair arrangement (1,2,3) comprising two measuring wedges (1,3) connected to each other by an adjustment device (7,8), the first measuring wedge (1) being displaceable relative to the second measuring wedge (3) by means of the adjustment device (7,8) to set the distance between the abutment faces (5,6), and the wedge pair arrangement (1,2,3) and the force sensor (18) being clamped in the pocket-shaped recess without attachment to a machine part,
**characterized in**
that the force sensor forms a constructional unit with the measuring wedge arrangement and is integrated in the first measuring wedge (1), and that the force sensor (18) with a first measuring face (11) projects beyond the measuring wedge (1) and forms the first abutment face (5), and is supported with the second measuring surface (14), being parallel to the first measuring surface, in the measuring wedge (1).

2. The force measuring device according to claim 1, characterized in that the slide face (16) of the second measuring wedge (3) extends nearly up to the lower abutment face (6) of the second measuring wedge (3).

3. The force measuring device according to claim 1 or 2, characterized in that the force sensor (18) in the measuring wedge (1) is arranged in the region of the larger height within a recess (13).

4. The force measuring device according to any one of claims 1 to 3, characterized in that the constructional height of the measuring wedge (1) in the region of the larger height is not substantially larger than the constructional height of the force sensor (18).

5. The force measuring device according to any one of claims 1 to 4, characterized in that the second measuring wedge (3) accommodates the first measuring wedge (1) in a recess (17) which is delimited by two side walls (4) extending laterally of the slide faces (15,16).

6. The force measuring device according to claim 5, characterized in that the recess (17) in the second measuring wedge (3) is further delimited by a transverse wall (2) which accommodates the adjustment device (7,8) cooperating with the first measuring wedge (1).

7. The force measuring device according to any one of claims 1 to 6, characterized in that the force sensor (18) comprises a plurality of piezoelectric integrated quartz plates (20) which allow a force measurement in one, two or three directions oriented orthogonally to each other.

8. The force measuring device according to any one of claims 1 to 7, characterized in that the angle of inclination of the slide faces (15,16) relative to the abutment faces (5,6) is about 3° to 9°, preferably about 6°.

9. The force measuring device according to any one of claims 1 to 7, characterized in that a connection cable (22) for the force sensor (18) is led to the outside on one of the short end sides of upper measuring wedge (1).

## Revendications

1. Dispositif dynamométrique avec un capteur de force (18) pour la mesure de forces dans un évidement (13) en forme de poche entre deux pièces de machine (10, 12) parallèles l'une à l'autre, de préférence dans un flux dérivé de force, avec deux surfaces d'appui (5, 6) parallèles l'une à l'autre, dont la distance orthogonale est variable, avec une disposition à paire de coins de mesure (1, 2, 3), qui comporte deux coins de mesure (1, 3), qui sont reliés l'un à l'autre par un dispositif de réglage (7, 8), le premier coin de mesure (1) pouvant être déplacé par le dispositif de réglage (7, 8) relativement au deuxième coin de mesure (3) pour le réglage de la distance entre les surfaces d'appui (5, 6), la disposition à paire de coins (1, 2, 3) et le capteur de force (18) étant encastrés dans l'évidement en forme de poche sans fixation à une pièce de machine,
caractérisé par le fait que le capteur de force constitue, avec la disposition à coins de mesure, une unité de construction et est intégré dans le premier coin de mesure (1), et que le capteur de force (18) fait saillie par une première surface de mesure (11) vis-à-vis du coin de mesure (1) et forme la première surface d'appui (5) et est en appui dans le coin de mesure (1) par la deuxième surface de mesure (14) parallèle à la première.

2. Dispositif dynamométrique selon la revendication 1, caractérisé par le fait que la surface de glissement (16) du deuxième coin de mesure (3) s'étend presque jusqu'à la surface d'appui (6) inférieure du deuxième coin de mesure (3).

3. Dispositif dynamométrique selon la revendication 1 ou 2, caractérisé par le fait que le capteur de force (18) est disposé dans un évidement (13) dans le coin de mesure (1) dans la région ayant la plus grande hauteur.

4. Dispositif dynamométrique selon l'une des revendications 1 à 3, caractérisé par le fait que l'encombrement du coin de mesure (1) dans la région ayant la plus grande hauteur n'est pas essentiellement plus grand que l'encombrement du capteur de force (18).

5. Dispositif dynamométrique selon l'une des revendications 1 à 4, caractérisé par le fait que le deuxième coin de mesure (3) reçoit le premier coin de mesure (1) dans un évidement (17) délimité par deux parois latérales (4) s'étendant sur le côté près des surfaces de glissement (15, 16).

6. Dispositif dynamométrique selon la revendication 5, caractérisé par le fait que l'évidement (17) dans le deuxième coin de mesure (3) est en outre délimité par une paroi transversale (2), qui reçoit le dispositif de réglage (7, 8) coopérant avec le premier coin de mesure (1).

7. Dispositif dynamométrique selon l'une des revendications 1 à 6, caractérisé par le fait que le capteur de force (18) se compose de plusieurs disques de quartz (20) piézo-électriques intégrés, qui permettent une mesure de force dans une, deux ou trois directions orthogonales l'une par rapport à l'autre.

8. Dispositif dynamométrique selon l'une des revendications 1 à 7, caractérisé par le fait que l'angle d'inclinaison des surfaces de glissement (15, 16) relativement aux surfaces d'appui (5, 6) s'élève à environ 3-9°, de préférence 6°.

9. Dispositif dynamométrique selon l'une des revendications 1 à 8, caractérisé par le fait qu'un câble de connexion (22) pour le capteur de force (18) sort par l'un des petits côtés frontaux du coin de mesure (1).
